# FASCICULE DE BREVET EUROPEEN

(11) **EP 4 011 695 B1**
(45) Date de publication et mention de la délivrance du brevet: **30.04.2025**
(21) Numéro de dépôt: 21213214.6
(22) Date de dépôt: 08.12.2021
(51) Int. Cl.: B60N 2/894, B60N 2/90, B60N 2/68, B60N 2/70, B60N 2/60

(54) **DOSSIER DE SIÈGE DE VÉHICULE**
RÜCKENLEHNE EINES FAHRZEUGSITZES
VEHICLE SEAT BACKREST

(30) Priorité: 09.12.2020 FR 2012942
(43) Date de publication de la demande: 15.06.2022
(73) Titulaire: FAURECIA Sièges d'Automobile, 92000 Nanterre (FR)
(72) Inventeur: MAUFFREY, Jean-Marie, 70290 CHAMPAGNEY (FR); PIEDERRIERE, Jean-Yves, 91670 ANGERVILLE (FR); POULET, Etienne, 70280 SAINT BRESSON (FR); GAZANIOL, Benoît, 91290 ARPAJON (FR); DURIEZ, Didier, 91220 LE PLESSIS-PÂTÉ (FR)
(74) Mandataire: Plasseraud IP

(56) Documents cités:
- US-A- 5 441 331
- US-A1- 2018 070 731
- US-A1- 2020 070 699
- US-A1- 2020 139 867

## Description

### Domaine technique

La présente invention est relative à un dossier de siège de véhicule, notamment de véhicule automobile. Il est également décrit un siège de véhicule comprenant un tel dossier, un procédé de montage d'un dossier de siège de véhicule et d'un siège de véhicule comprenant un tel dossier. Enfin, la présente description se rapporte également à un procédé de remplacement d'un module central de garniture d'un tel dossier de siège.

### Technique antérieure

Dans le domaine automobile, en particulier, il est connu de réaliser un dossier de siège de véhicule en recouvrant une armature de dossier de mousse. L'ensemble est ensuite recouvert d'une housse.

Le dossier du siège peut intégrer de nombreuses fonctions de confort et/ou de sécurité. Pour ce faire, il est connu de fixer un support à l'armature de dossier, de monter les différents éléments nécessaires à la réalisation des fonctions de confort et/ou de sécurité sur le support ou sur l'armature de dossier, puis de recouvrir l'ensemble ainsi obtenu de mousse. Une housse vient alors coiffer l'ensemble.

Ainsi en fonction du nombre et de la complexité des fonctions à intégrer dans le dossier d'un siège, le montage d'un dossier peut être très différent sur une chaîne d'assemblage.

En outre, le montage d'un tel dossier est généralement réalisé au moins en partie par un opérateur, qui doit donc être capable d'assembler les différentes variantes d'un même dossier.

Le document US2020/070699 montre un dossier avec une traverse haute, une traverse basse, un module central de garniture et deux modules latéraux de garniture.

Il existe donc un besoin pour un dossier de siège pouvant être monté de manière sensiblement identique quelques soient les fonctions qu'il intègre, avec un temps de montage sensiblement constant.

### Résumé

À cette fin, il est revendiqué un dossier de siège de véhicule comprenant les caractéristiques selon la revendication 1

Ainsi, la garniture d'un tel dossier peut facilement et rapidement être montée sur l'armature de dossier. En outre, en adaptant les composants du module central de garniture et/ou des modules latéraux de garniture, il est possible, en conservant toujours la même configuration générale du dossier à trois modules de garniture indépendants, de monter des dossiers de siège de véhicule présentant des fonctionnalités variables.

Selon des modes de réalisations préférés, le dossier de siège de véhicule comprend une ou plusieurs des caractéristiques suivantes, prises seules ou en combinaison :
- chaque module de garniture comprend une garniture indépendante de la garniture des deux autres modules de garniture ;
- le module central de garniture et/ou les modules latéraux de garniture comprend/nent des moyens élastiques pour limiter la déflexion du support du module central de garniture, par rapport à l'armature de dossier et/ou du bloc de mousse par rapport au support du module central de garniture ;
- le module central de garniture comprend une pompe à air et une pluralité de poches gonflables, en communication de fluide avec la pompe à air, de préférence via une vanne de commande sélective de l'alimentation en air des poches gonflables ;
- un ventilateur est fixé sur le support, le bloc de mousse du module central de garniture comprenant des trous traversant, en communication de fluide avec le ventilateur ;
- au moins un haut-parleur et/ou au moins un dispositif vibrant est fixé sur le support de manière à être disposé entre le support et le bloc de mousse du module central de garniture ou au moins partiellement reçu dans le bloc de mousse du module central de garniture ;
- chaque module latéral de garniture comporte un bloc de mousse et, de préférence, un dispositif de réglage de maintien latéral et/ou un coussin gonflable de sécurité latéral ;
- chaque module latéral de garniture comprend en outre un support sur lequel est fixé le bloc de mousse ;
- le module central de garniture et/ou au moins l'un, de préférence chacun parmi les modules latéraux de garniture comprend/nent une housse respective, chaque housse recouvrant au moins une partie du bloc de mousse respectif, le cas échéant ;
- le dossier de siège de véhicule comprend en outre une housse commune recouvrant en tout ou partie les trois modules de garniture, notamment les blocs de mousse respectifs des trois modules de garniture, le cas échéant.

Selon un autre aspect, il est également revendiqué un siège de véhicule automobile comprenant une assise avec une armature d'assise et un dossier tel que décrit ci-avant dans toutes ses combinaisons, l'armature de dossier étant fixée à l'armature d'assise, de préférence de manière à pouvoir pivoter autour d'un axe transversal.

Selon encore un autre aspect, il est revendiqué un procédé de montage d'un dossier de siège de véhicule automobile tel que décrit ci-avant dans toutes ses combinaisons, comprenant les étapes consistant à :
fournir une armature de dossier ;
fournir au moins trois modules de garniture dont un module central de garniture et deux modules latéraux de garniture destinés à être disposés chacun d'un côté respectif du module central de garniture ;
fixer chacun des modules de garniture sur l'armature de dossier.

Il est encore revendiqué un procédé de fabrication d'un siège de véhicule, comprenant les étapes consistant à :
fournir une assise avec une armature d'assise ;
monter un dossier en mettant en œuvre le procédé décrit ci-avant dans toutes ses combinaisons ; et
fixer le dossier à l'assise, de préférence de manière que le dossier puisse pivoter autour d'un axe transversal par rapport à l'assise.

Il est également revendiqué un procédé de remplacement d'un module central de garniture d'un dossier de siège tel que décrit ci-avant, dans toutes ses combinaisons, comprenant les étapes consistant à :
i) retirer un premier module central de l'armature de dossier ;
ii) fixer un deuxième module central sur l'armature de dossier.

De préférence, l'étape i) et/ou l'étape ii) est/sont mise/s en œuvre sans démonter au moins l'un des modules latéraux de garniture, de préférence aucun des deux modules latéraux de garniture.

### Brève description des dessins

D'autres caractéristiques et avantages de l'invention apparaîtront au cours de la description suivante d'une de ses formes de réalisation, donnée à titre d'exemple non limitatif, en regard des dessins joints. Sur les dessins :
La figure 1 représente schématiquement une vue de côté d'un exemple de siège de véhicule ;
La figure 2 représente schématiquement en perspective le dossier du siège de véhicule de la figure 1 ;
La figure 3 représente schématiquement une vue éclatée du dossier de siège de véhicule de la figure 2 ;
La figure 4 représente schématiquement en perspective l'armature du dossier de siège de véhicule des figures 2 et 3 ;
La figure 5 représente schématiquement en perspective une première face d'un support de module central de garniture mis en œuvre dans le dossier de siège de véhicule des figures 2 et 3 ;
La figure 6 représente schématiquement en perspective la deuxième face, opposée à la première face, du support de module central de garniture de la figure 5 ;
La figure 7 représente schématiquement le support de module central de garniture des figures 5 et 6 monté sur l'armature de dossier de la figure 4 ; et
La figure 8 représente schématiquement une vue en perspective du dossier de siège de véhicule des figures 2 et 3, dépourvu des blocs de mousse des différents modules de garniture.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un siège de véhicule dans sa position normale d'utilisation.

En particulier, la direction longitudinale **X** s'entend de la direction longitudinale du siège. La direction longitudinale du siège est considérée être la même que la direction longitudinale du véhicule automobile dans lequel le siège est monté. Cette direction longitudinale **X** correspond à la direction normale d'avancement du véhicule. La direction longitudinale **X** est horizontale. La direction transversale **Y** du siège correspond ainsi à la direction transversale ou latérale du véhicule automobile. Cette direction transversale correspond à une direction perpendiculaire à la direction normale d'avancement du véhicule. La direction transversale **Y** est horizontale. Enfin, la direction verticale **Z** est une direction verticale du siège, perpendiculaire aux directions longitudinale et transversale.

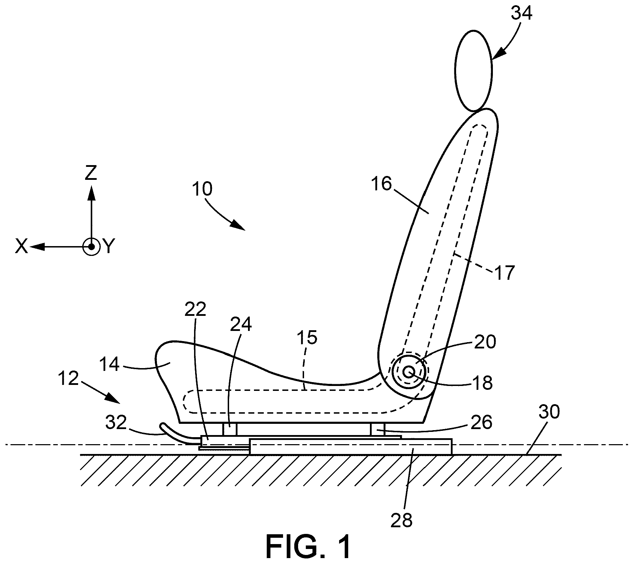

La figure 1 représente de façon schématique un siège de véhicule automobile **10** monté sur un mécanisme à glissières **12.**

Le siège **10** comporte une assise **14,** avec une armature d'assise **15,** sur laquelle un dossier **16,** avec une armature dossier **17,** est monté. L'armature de dossier **17** est ici pivotante autour d'un axe **18** transversal, par rapport à l'armature d'assise **15.** Pour ce faire, un mécanisme d'articulation **20** est disposé entre l'armature d'assise **15** et l'armature de dossier **17.**

L'assise **14** est montée sur des profilés mobiles **22,** également appelé coulisses ou profilés mâles, par l'intermédiaire de pieds **24, 26.** Chaque profilé mobile **22** fait partie d'une glissière **12** et est associé à un profilé fixe **28.** Le profilé fixe **28** est également appelé rail ou profilé femelle. Le profilé fixe **28** est fixé au plancher **30** d'un véhicule automobile.

Le siège **10** comprend dans cet exemple un élément de commande manuelle **32,** appelé palonnier, de commande en coulissement des glissières **12.** Cet élément de commande manuelle **32** permet notamment de bloquer et débloquer des systèmes d'arrêt du coulissement des profilés mobiles **22** par rapport au profilés fixes **28** respectifs. Une fois les systèmes d'arrêt débloqués, l'élément de commande manuelle **32** peut également être utilisé pour faire coulisser les profilés mobiles **22** par rapport à leurs profilés fixes **28** respectifs de la glissière **12** dans la direction longitudinale **X** des glissières **12.** Les profilés fixes **28** et mobiles **22** des glissières **12** sont généralement métalliques.

Alternativement, le déplacement des profilés mobiles **22** par rapport aux profilés fixes **28** est commandé au moyen d'un actionneur.

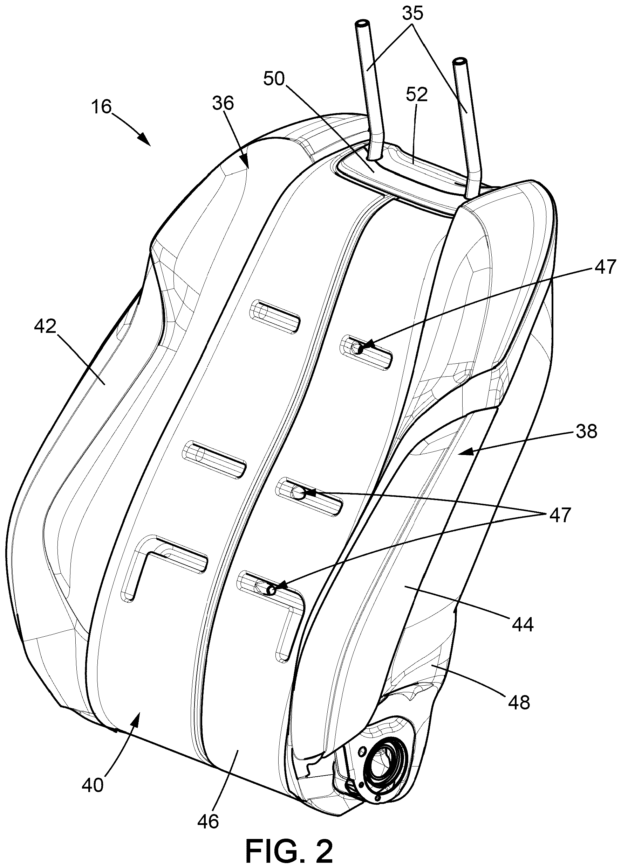

Selon l'exemple illustré, le siège **10** peut également comprendre un appui-tête **34,** avec une armature d'appui-tête **35,** partiellement visible sur la figure 2, sous la forme de tiges **35** fixées à l'armature de dossier **17.**

Dans la suite, on décrit plus en détail le dossier **16** du siège de véhicule **10.**

Comme cela est visible sur la figure 2 notamment, le dossier **16** illustré comprend essentiellement un premier module latéral de garniture **36,** un deuxième module latéral de garniture **38** et un module central de garniture **40,** tel que les premier et deuxième modules latéraux de garniture **36, 38** soient disposés chacun d'un côté respectif du module central de garniture **40.** Chaque module de garniture **36, 38, 40** comprend ici un bloc de mousse **42, 44, 46,** seul élément visible du module de garniture respectif sur la figure 2. Comme cela est notamment visible sur la figure 2, le bloc de mousse **46** du module central de garniture **40** peut comprendre des trous **47.** Ces trous **47** permettent une ventilation du dos de l'occupant du siège, comme il sera décrit ultérieurement.

Dans l'exemple illustré, le module central de garniture **40** forme la face d'appui de la cuvette du dossier **16,** c'est-à-dire la partie centrale d'appui du dos de l'occupant du siège, tandis que les modules latéraux **36, 38** forment les portions latérales en saillie par rapport à la cuvette de cette même face d'appui du dos de l'occupant du siège.

Il est à noter ici que les modules de garniture **36, 38, 40** préexistent à leur fixation sur l'armature de dossier **17.** Ainsi, ces modules de garniture **36, 38, 40** ne sont pas réalisés par surmoulage de l'armature de dossier **17** et/ou d'éléments de structure déjà solidaires de l'armature de dossier **17.** Ceci n'empêche pas que les blocs de mousse **42, 44, 46** des différents modules de garniture **36, 38, 40** peuvent être réalisés par surmoulage d'un éventuel support du module de garniture **36, 38, 40** respectif. Cependant, ce surmoulage est réalisé préalablement à la fixation du support en question sur l'armature de dossier **17.**

Le dossier **16** comprend encore une coque **48,** ci-après dite « coque arrière », définissant la plus grande partie de la face arrière du dossier **16.** Le dossier **16** comprend encore, selon l'exemple illustré, deux éléments de finition **50, 52** supérieurs. Les deux éléments de finition **50, 52** entourent les tiges **35** de support de l'appui-tête **34.**

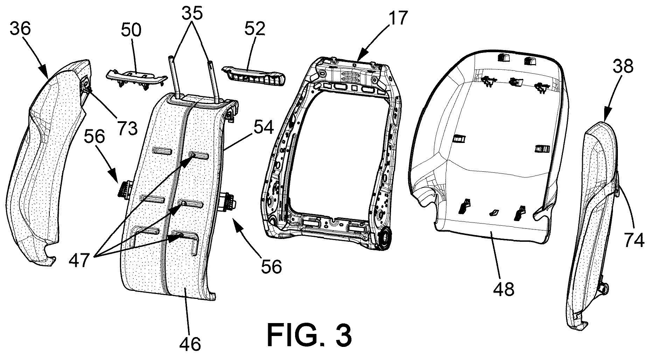

De manière remarquable ici et comme illustré schématiquement par la figure 3, chaque module de garniture **36, 38, 40** est fixé à l'armature de dossier **17,** indépendamment des deux autres modules de garniture **36, 38, 40.** En d'autres termes, chaque module de garniture **36, 38, 40** peut être fixé sur l'armature de dossier **17** alors que les deux autres modules de garniture **36, 38, 40** ne sont pas fixés sur l'armature de dossier **17.** Ainsi, chaque module de garniture **36, 38, 40** est apte à être fixé sur l'armature de dossier **17** indépendamment des deux autres modules de garniture **36, 38, 40.** Un module de garniture **36, 38, 40** peut cependant être fixé à un autre module de garniture **36, 38, 40.** Toutefois, de préférence, les modules de garniture **36, 38, 40** sont indépendants en ce qu'il n'existe pas de fixation directe d'un module de garniture **36, 38, 40** sur un autre module de garniture **36, 38, 40.** Le bloc de mousse **46** du module central de garniture **40** peut toutefois être monté serré entre les blocs de mousse **42, 44** des deux modules latéraux de garniture **36, 38.**

La coque arrière **48** peut également être directement fixée sur l'armature de dossier **17,** de préférence indépendamment des modules de garniture **36, 38, 40.** La coque arrière **48** peut être fixée à l'armature de dossier **17** par tout moyen adapté, notamment par vissage ou rivetage. Selon encore un autre exemple, la coque arrière **48** est emboîtée élastiquement sur l'armature de dossier **17.** Avantageusement, la coque arrière **48** est adaptée à être fixée sur l'armature de dossier **17** après la fixation des modules de garniture **36, 38, 40.** Ceci peut en effet permettre d'accéder par l'arrière du siège **10,** aux différents éléments des modules de garniture **36, 38, 40** devant être reliés fonctionnellement, après que les modules de garniture **36, 38, 40** ont été fixés sur l'armature de dossier **17,** avant de fixer la coque arrière **48.**

Les deux éléments de finition **50, 52** sont quant à eux fixés, selon l'exemple illustré, sur le module central de garniture **40.** Ces éléments de finition **50, 52** peuvent être fixés au module central de garniture **40** par tout moyen adapté, accessible à l'homme de l'art. Notamment, les éléments de finition **50, 52** peuvent être emboîtés élastiquement sur le bloc de mousse **46** du module central de garniture **40.** Un élément de finition **50, 52** peut également être fixé à l'autre élément de finition **52, 50.** Là encore, tout moyen de fixation accessible à l'homme de l'art peut être mis en œuvre, notamment un emboîtage élastique des éléments de finition **50, 52.**

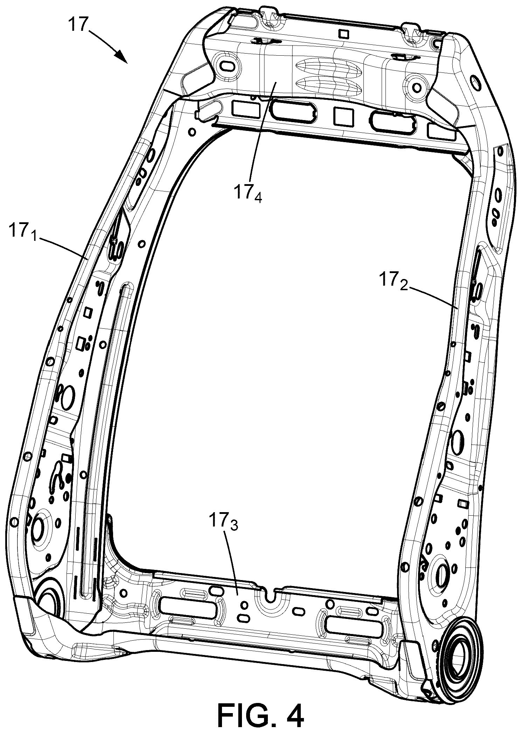

Comme illustré à la figure **4****,** l'armature de dossier **17** comprend essentiellement un premier montant **17₁,** un deuxième montant **17₂,** une première traverse **17₃,** ci-après dite « traverse basse **17₃** », et une deuxième traverse **17₄,** ci-après dite « traverse haute **17₄** ». Les montants **17₁, 17₂** et les traverses **17₃, 17₄** forment une armature de dossier **17** en forme de cadre. Pour ce faire, les montants **17₁, 17₂,** et les traverses **17₃, 17₄** peuvent être fixées ensemble, notamment soudés ensemble. Alternativement, l'armature de dossier **17** est monobloc, celle-ci étant par exemple moulée.

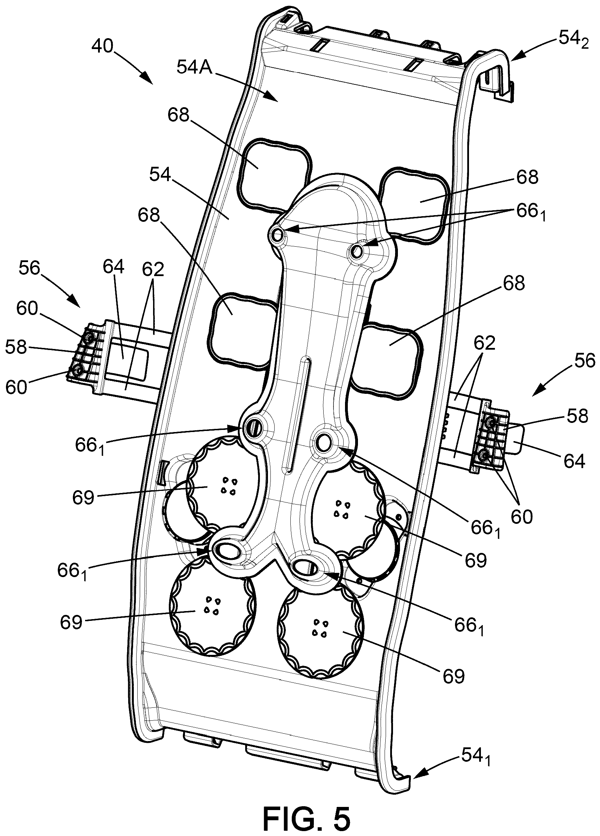

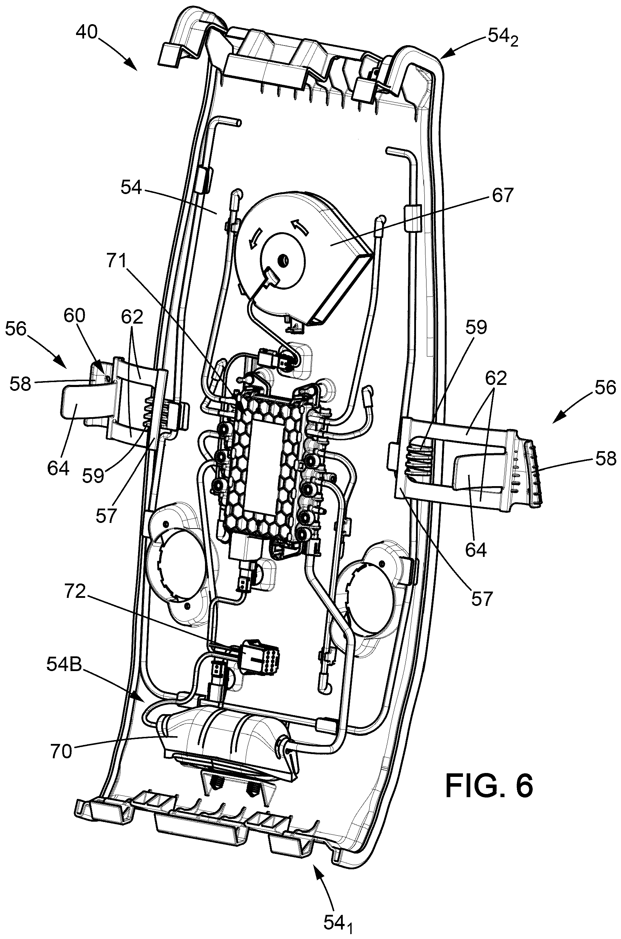

Sur l'armature de dossier **17,** est fixé le module central de garniture **40** illustré aux figures 5 et 6, respectivement en vue de face et en vue de derrière, sans le bloc de mousse **46** associé.

Sur ces figures, le module central de garniture **40** comprend essentiellement un support **54,** ici sous forme de plaque. Le support **54** est notamment plus rigide que le bloc de mousse **46** du module central de garniture **40.** Le bloc de mousse **46** du module central de garniture **40** est fixé sur le support **54.** Notamment, le bloc de mousse **46** peut être surmoulé sur le support **54.** Alternativement, le bloc de mousse **46** peut être collé ou emboité élastiquement sur le support **54,** le bloc de mousse **46** présentant de préférence des inserts en plastique dans ce dernier cas, formant des reliefs d'emboîtage élastique sur le support **54.**

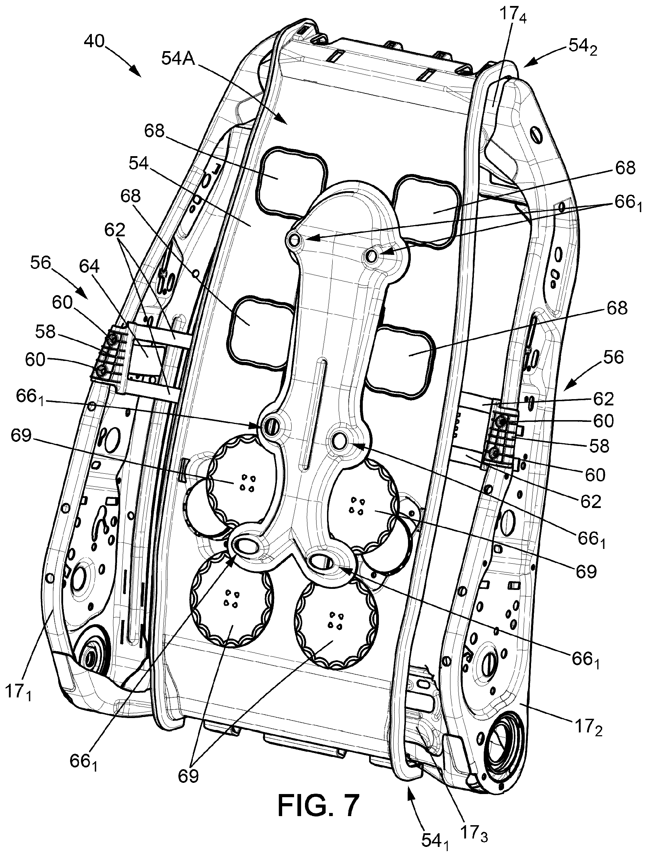

Le support **54** s'étend essentiellement selon une direction longitudinale. Les extrémités **54₁, 54₂** longitudinales du support **54** sont ici recourbées. Ainsi, l'extrémité supérieure **54₂** du support **54** reposent sur la traverse haute **17₄** de l'armature de dossier **17,** comme illustré à la figure 7. De manière analogue, l'extrémité inférieure **54₁** du support **54** reçoivent la traverse basse **17₃** de l'armature de dossier **17** comme ceci est visible sur la figure 7. Les extrémités **54₁, 54₂** présentent ici des moyens de fixation aux traverses basse **17₃** et haute **17₄,** respectivement, de l'armature de dossier **17.** Ces moyens de fixation comprennent
- des reliefs complémentaires d'emboitage élastique, pour une fixation par emboîtage élastique. Cette solution limite le nombre de pièces et de manipulations nécessaires pour fixer le support 54 sur l'armature de dossier 17. En outre, les éléments de fixation peuvent comprendre les moyens supplémentaires suivants:
   - des reliefs complémentaires, par exemple pour une fixation en force du module central de garniture **40** sur l'armature de dossier **17** ; et/ou
   - des trous correspondant pour une fixation à l'aide de vis, de boulons ou de rivets, par exemples.

En outre, selon l'exemple illustré, le module central de garniture **40** peut comprendre encore des bretelles **56** limitant la déflexion du support **54** par rapport à l'armature de dossier **17.** Ici, les bretelles **56** permettent en outre de fixer le support **54** sur les montants **17₁, 17₂** de l'armature de dossier **17.** Chaque bretelle **56** comporte ici une poutrelle **57,** en contact avec le support **54.** Ici, la poutrelle **57** est fixée au support **54.** Pour ce faire, le support **54** comporte, dans l'exemple illustré, des crochets **59** d'emboîtage élastique d'une poutrelle **57** respective. Il est à noter ici que les crochets **59** sont sur la face **54B** du support **54** opposée à la face **54A** destinée à être orientée vers l'occupant du siège. On assure ainsi un meilleur confort de l'occupant et/ou un meilleur maintien du support **54,** notamment contre la déflexion du support **54** quand un occupant s'appuie sur le dossier **16.** Selon une première variante, les bretelles **56** peuvent être fixées sur le support **54** avant le montage du module central de garniture **40** sur l'armature de dossier **17.** Selon une autre variante, les bretelles **56** sont fixées sur l'armature de dossier **17,** préalablement au montage du module central de garniture **40** sur l'armature de dossier **17.** Dans ce cas, lors du montage du module central de garniture **40,** les poutrelles **57** s'emboîtent élastiquement dans les crochets **59** par simple mouvement relatif du module central de garniture **40** en direction de l'armature de dossier **17.**

Chaque bretelle **56** comprend en outre au moins une première lame **62,** ici deux lames **62.** Chaque première lame **62** s'étend depuis une poutrelle **57** respective. Les premières lames **62** sont avantageusement plus souples que le support **54.** Les premières lames **62** assurent un maintien plus souple du support **54** lorsqu'un occupant du siège prend appui sur le dossier **16.**

À l'extrémité des première lames **62,** opposées à la poutrelle **57,** chaque bretelle **56** définit un logement **58** de réception d'une portion d'un montant **17₁, 17₂** respectif, et des trous **60** ménagés sur la paroi formant le logement **58,** destinés à être disposés en vis-à-vis de trous correspondant sur les montants **17₁, 17₂,** pour une fixation par vis, boulon ou rivet, notamment.

De plus, dans l'exemple illustré, chaque bretelle **56** comporte une deuxième lame **64,** orientée sensiblement perpendiculairement aux premières lames **62** et pouvant prendre appui, chacune, sur un montant **17₁**, **17₂** respectif de l'armature de dossier **17.** Ces deuxièmes lames **64** élastiques assurent le bon positionnement vers l'avant du dossier **16,** de la poutre **57** de la bretelle **56** considérée. Ces deuxièmes lames **64** sont de préférence plus rigides que les premières lames **62.** Les deuxièmes lames **64,** ici compressées entre le support **54** et l'armature de dossier **17** tendent à repousser le support **54** limitant ainsi la déflexion du support **54** par rapport à l'armature de dossier **17** lorsqu'un occupant du siège prend appui sur le dossier **16.** L'élasticité des lames **62, 64** apporte en outre du confort à l'occupant du siège de véhicule, en ce que le support **54** peut se déplacer légèrement par rapport à l'armature de dossier **17,** par déformation élastique des lames **62, 64.**

Les bretelles **56,** afin d'être fixées à l'armature de dossier **17,** peuvent notamment comprendre :
- des reliefs complémentaires, par exemple pour une fixation en force des bretelles **56** sur l'armature de dossier **17** ; et/ou
- des trous correspondant pour une fixation à l'aide de vis, de boulons ou de rivets, par exemples ; et/ou
- des reliefs complémentaires d'emboitage élastique (ou clips), pour une fixation par emboîtage élastique.

Comme cela est visible sur les figures 4 à 8, le support **54** peut être équipés de différents éléments associés chacun à une ou plusieurs fonctions de confort de l'occupant du siège **10.**

Selon l'exemple illustré, un guide d'air **66** est ainsi fixé au support **54,** de manière étanche. Le guide d'air **66** comporte des trous **66₁** destinés à être disposés sensiblement en regard des trous **47** dans le bloc de mousse **46** du module central de garniture **40.** Ce guide d'air **66** est disposé au niveau d'une ouverture traversante dans le support **54,** un ventilateur **67** étant fixé sur la face opposée **54B** du support **54** pour souffler de l'air dans le guide d'air **66.** Avantageusement, le guide d'air **66** peut avoir une forme ergonomique assurant une réception plus confortable du dos de l'occupant du siège de véhicule. Cette fonction de réception plus confortable du dos de l'occupant du siège peut, en variante, être assurée par un élément distinct d'un guide d'air **66.**

Par ailleurs, des poches gonflables **68, 69** sont fixées sur le support **54,** ici sur la face **54A** du support **54** destinée à être orientée vers le dos de l'occupant du siège **10.** Dans l'exemple illustré, les poches gonflables **68, 69** sont sensiblement régulièrement réparties sur le support **54,** en matrice. Dans l'exemple de la figure 5, huit poches gonflables **68, 69** sont ainsi réparties en quatre lignes de deux colonnes de poches gonflables **68, 69.** Les huit poches gonflables **68, 69** peuvent être alimentées en air sélectivement par une pompe à air **70,** via une vanne **71.** Ainsi, en commandant la vanne **71** selon un schéma de gonflage particulier des poches gonflables **68, 69,** il est possible d'obtenir un effet massant sur le dos de l'occupant du siège **10.** Alternativement, toutes les poches gonflables **68, 69** peuvent être alimentées en air simultanément, notamment pour améliorer le maintien du dos de l'occupant du siège, les poches gonflables **68, 69** se gonflant jusqu'à s'adapter à la forme du dos de l'occupant du siège. Selon encore une autre alternative, une partie des poches gonflables **68** permet de masser une partie du dos de l'occupant du siège **10,** notamment la partie haute du dos, tandis que l'autre partie des poches gonflables **69** assurent essentiellement une fonction de maintien du dos de l'occupant du siège, notamment une fonction de maintien d'une partie basse du dos de l'occupant du siège.

D'autres fonctions de confort peuvent être associées au support **54.** Notamment un ou plusieurs haut-parleurs et/ou un ou plusieurs dispositifs vibrants (de l'anglais « exciter ») et/ou un ou plusieurs fils résistifs de chauffage du dos de l'occupant du siège de véhicule **10** peuvent être fixés sur le support **54.** De préférence, le ou les haut-parleurs et/ou le ou les dispositif vibrants et/ou le ou les fils résistifs sont disposés entre le support **54** et le bloc de mousse **46** du module central de garniture **40** ou au moins partiellement reçus dans le bloc de mousse **46** du module central de garniture **40.**

De préférence, tous les éléments fixés au support **54** nécessitant une alimentation électrique et/ou une commande depuis l'extérieur du siège et/ou un transfert d'information vers l'extérieur du siège sont reliés électriquement à un unique connecteur **72** assurant la liaison avec l'extérieur du siège. Ainsi, le montage du siège est grandement simplifié, qui ne nécessite plus qu'une connexion électrique entre l'extérieur du siège et le connecteur **72** pour alimenter électriquement, commander et communiquer avec les éléments adaptés du module central de garniture **40.** Le connecteur **72** est avantageusement disposé sur la face **54B** du support **54** destinée à être opposée au dos de l'occupant du siège.

Par ailleurs, comme cela est visible notamment sur la figure 7, sur chaque montant **17₁, 17₂** de l'armature de dossier **17,** est fixé un support **73, 74** du premier module latéral de garniture **36** et du deuxième module latéral de garniture **38,** respectivement. Chacun des support **73, 74** peut être fixé au montant **17₁, 17₂** associé par emboitage élastique et/ou vissage et/ou rivetage et/ou fixation en force, notamment.

Sur chacun des supports **73, 74** est fixé le bloc de mousse **42, 44** associé du premier ou du deuxième module latéral de garniture **36, 38.** Notamment, chaque bloc de mousse **42, 44** peut être surmoulé sur le support **73, 74** respectif. Chaque bloc de mousse **42, 44** peut alternativement être collé ou emboité élastiquement sur le support **73, 74** associé. Dans ce dernier cas, les blocs de mousse **42, 44** peuvent comprendre des inserts en plastique.

Une poche gonflable **76, 78** d'un dispositif de réglage du maintien latéral du dos de l'occupant du siège (de l'anglais « bolster ») est fixée sur chaque support **73, 74** de module latéral.

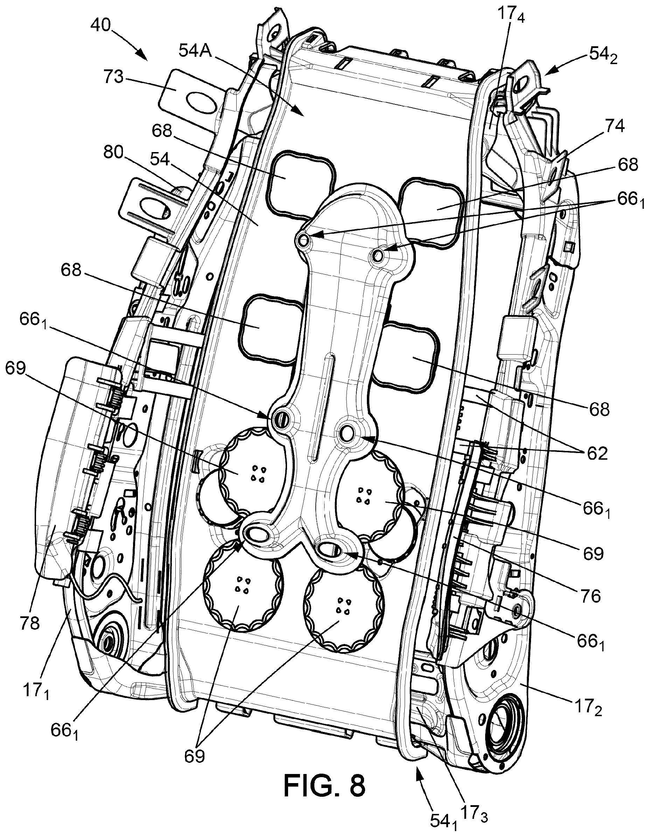

Sur le support **73** du premier module latéral de garniture **36** illustré à la figure 8, est fixé une poche gonflable **78** et une pompe **80** adaptée à gonfler la poche gonflable **78.** La poche gonflable **78** a une fonction de confort plutôt que de sécurité, en ce qu'elle peut permettre un effet massant et/ou une meilleure adaptation de la forme du module latéral de garniture **36** à l'occupant du siège. Une pompe à air **80** peut également être fixée sur le support **74** de l'autre module latéral de garniture, afin de gonfler la poche gonflable **78** associée. Avantageusement, en effet, une pompe à air **80** est disposée dans chaque module latéral de garniture **36, 38** pour éviter une connexion aéraulique entre un module de garniture **36, 38, 40** et un autre **36, 38 40.**

Chaque module latéral de garniture **36, 38** peut en outre être équipé d'un ou plusieurs coussins gonflables de massage et/ou d'un dispositif de coussin gonflable de sécurité latéral. Le module latéral de garniture **36** ou **38** peut être pré-équipé de l'airbag **80** avant assemblage sur armature.

Là encore, les modules latéraux de garniture **36, 38** peuvent comprendre d'autres fonctions de confort.

Comme pour le module central de garniture **40,** les éléments de chaque module latéral de garniture **36, 38** nécessitant une alimentation électrique, une commande ou un transfert d'informations, sont de préférence reliés électriquement à un unique connecteur de chaque module latéral de garniture **36, 38.** On simplifie ainsi le montage du dossier du siège.

Le dossier **10** tel qu'il vient d'être décrit, est particulièrement simple à monter.

Ainsi, un procédé de montage d'un tel dossier peut comprendre une première étape consistant à fournir une armature de dossier **17** et les trois modules de garniture **36, 38, 40.** À cette étape, l'armature de dossier **17** peut éventuellement être déjà fixée sur l'armature d'assise **15** et/ou avoir déjà reçu l'armature d'appui-tête **35** en tout ou partie. Notamment, les tiges de support de l'appui-tête peuvent déjà être fixées sur l'armature de dossier **17.**

Dans un deuxième temps, on fixe les modules de garniture **36, 38, 40** sur l'armature de dossier **17.** L'ordre de fixation des modules de garniture **36, 38, 40** peut dépendre de la géométrie des supports **54, 73, 74** des différents modules de garniture **36, 38, 40** et de leurs fixations sur l'armature de dossier **17,** notamment. Selon l'exemple de dossier décrit précédemment, on peut par exemple commencer par fixer le module central de garniture **40,** puis les deux modules latéraux **36, 38.** Alternativement cependant, le module central de garniture **40** peut être fixé après les deux modules latéraux **36, 38.**

Il est à noter que ces fixations successives peuvent être réalisées en tout ou partie, par un automate. Notamment, le module central de garniture **40** peut être « empioché » sur la traverse haute **17₄** de l'armature de dossier **17,** puis l'extrémité basse **54₁** peut être fixée sur la traverse basse **17₃** de l'armature de dossier **17.** Le vissage des deuxièmes moyens de fixation **56** peut intervenir après cette étape. Par « empioché », on entend ici que l'extrémité repliée **54₂** du support **54** du module central de garniture **40** vient prendre appui sur la traverse haute **17₄** de l'armature de dossier **17,** des reliefs complémentaires de l'extrémité repliée **54₂** du support **54,** d'une part, et de l'armature de dossier **17** et/ou de l'armature d'appui-tête **35,** d'autre part, guidant un mouvement essentiellement de rotation du support **54** par rapport à un axe transversal d'extension de la traverse haute **17₄** de l'armature de dossier **17.** Ici, par exemple, des encoches réalisées à l'extrémité **54₂** du support **54** et recevant les tiges de support d'appui-tête **35** permettent le guidage du mouvement du module central de garniture **40** par rapport à l'armature de dossier **17.**

On réalise ensuite les connexions électriques voire aérauliques nécessaires. De préférence, il n'y a qu'une seule connexion électrique à réaliser pour chaque module de garniture **36, 38, 40.**

Enfin, on fixe la coque arrière **48** sur l'armature de dossier **17** et les éléments de finition **50, 52.** Là encore, l'ordre de fixation de la coque arrière **48** et des éléments de finition **50, 52** peut varier.

Ainsi, le montage du siège **10** est très simple à réaliser. En outre, il peut être identique ou sensiblement identique, quelles que soient les fonctions intégrées ou non au dossier **16.** Il est ainsi possible de prévoir un unique automate pour monter une grande variété de dossiers de siège de véhicule distincts, toujours avec un temps de montage sensiblement égal. La ligne de montage d'une telle gamme de sièges est ainsi plus simple et plus facile à gérer.

Il est également à noter qu'un module de garniture **36, 38, 40** peut facilement être changé, sans avoir à changer les autres modules de garniture **36, 38, 40,** voire sans avoir à les démonter. Il peut être intéressant, par exemple, de remplacer le module central de garniture **40** par un module central de garniture **40** accueillant une ou plusieurs nouvelles fonctions de confort par rapport à l'ancien module central de garniture **40.** Dans ce cas, ne pas démonter les modules latéraux de garniture signifie ne pas toucher aux fonctions de sécurité du siège que sont les deux airbags latéraux présents dans ou associés aux modules latéraux de garniture **36, 38.** On limite ainsi les risques de défaillance de ces systèmes de sécurité après l'opération de remplacement du module central de garniture **40.**

Ainsi, dans l'exemple illustré, chaque module de garniture **36, 38, 40** comprend un support et un bloc de mousse fixé sur le support. Alternativement, un module de garniture peut être dépourvu de support, voire ne comprendre qu'un bloc de mousse. Lorsqu'un module de garniture est dépourvu de support comme décrit précédemment, il peut comporter des inserts rigides, incorporés dans le bloc de mousse, pour en faciliter la fixation sur l'armature de dossier. De tels inserts peuvent être incorporés en surmoulant le bloc de mousse correspondant sur ces inserts. Par « rigide », on entend ici que les inserts sont notamment plus rigides que la mousse.

Le support **54** du module de garniture central **40** peut également prendre d'autres formes que celle décrite ci-avant. Notamment, le support **54** peut être un cadre comportant deux traverses, de préférence rigides, et deux montants, rigides ou souples, des éléments ressorts, notamment des fils élastiques s'étendant entre les traverses et/ou entre les montants. Dans ce cas, avantageusement, les traverses sont fixées sur les traverses de l'armature de dossier. Les montants du support peuvent alors être libres par rapport aux montants de l'armature de dossier **17.** Des bretelles **56** peuvent également être prévues entre les montants du support alors formé et les montants de l'armature de dossier **17,** notamment quand les montants sont rigides. Le bloc de mousse du module central de garniture peut alors être surmoulé sur le support **54,** notamment sur les traverses du support **54** en forme de cadre. Même lorsque le support **54** n'est pas sous forme d'une plaque telle que décrite ci-avant, un ou plusieurs éléments assurant a une fonction de confort peut/vent être fixé/s sur le support **54.** Ces éléments sont notamment ceux décrits précédemment. Ceci est en particulier vrai lorsque le support a une forme de cadre comme décrit ci-dessus.

Également, chaque module de garniture **36, 38, 40** peut comprendre une housse recouvrant en tout ou partie le bloc de mousse **42, 44, 46** respectif. La housse peut notamment être disposée dans le moule servant au surmoulage du bloc de mousse **42, 44, 46** sur le support **54, 73, 74** respectif. La housse adhère alors au bloc de mousse **42, 44, 46.** Alternativement, la housse peut être fixée sur le bloc de mousse **42, 44, 46** et/ou sur le support **54, 73, 74** après la formation du bloc de mousse **42, 44, 46.** En d'autres termes, la housse peut être rapportée sur le bloc de mousse **42, 44, 46** et/ou sur le support **54, 73, 74.** La fixation de la housse est alors réalisée par tout moyen accessible à l'homme de l'art.

Selon une autre variante encore, une housse unique est mise en œuvre pour recouvrir les trois blocs de mousse **42, 44, 46** des modules de garniture **36, 38, 40.** Là encore, dans ce cas, la housse est rapportée sur les blocs de mousse **42, 44, 46** et/ou sur les supports **54, 73, 74** respectif des modules de garniture **36, 38, 40,** voire sur l'armature de dossier **17** et/ou la coque arrière **48.** Et là encore, la fixation de la housse est réalisée par tout moyen accessible à l'homme de l'art.

Avantageusement, chaque module de garniture **36, 38, 40** est garni indépendamment des deux autres, comme décrit précédemment. Alternativement cependant, il est envisageable qu'un bloc de mousse, par exemple, soit commun à plusieurs modules de garniture, notamment à tous les modules de garnitures **36, 38, 40.**

Enfin, dans l'exemple illustré, les bretelles **56** sont fixées entre le support **54** et l'armature de dossier **17.** Alternativement, cependant, les bretelles peuvent être fixées entre le support **54** et les modules latéraux **36, 38,** notamment les supports **73, 74** des modules latéraux **36, 38.** Des bretelles **56** peuvent également être fixées sur l'armature de dossier **17** et/ou sur les supports **73, 74** des modules latéraux de garniture **36, 38,** et n'être qu'en contact avec le support **54,** notamment avec la face **54B** du support **54** qui n'est pas orientée vers l'occupant du siège.

Même dans le cas où les bretelles **56** sont fixées dans les modules latéraux **36, 38,** le module central de garniture **40** peut encore être fixé à l'armature de dossier **17,** indépendamment de la fixation aux modules latéraux **36, 38** via les bretelles **56.**

Plus généralement, dans l'exemple décrit ci-avant, chaque module de garniture **36, 38, 40** est fixé à l'armature de dossier **17** indépendamment des autres modules de garniture **36, 38, 40.** En d'autres termes, des moyens de fixation sont mis en œuvre uniquement entre l'armature de dossier, d'une part, et chacun des modules de garniture **36, 38, 40,** d'autre part. Alternativement, cependant, chaque module de garniture **36, 38, 40** peut être fixé sur l'armature d'assis **17** indépendamment des autres modules de garniture **36, 38, 40.** Ainsi, bien qu'il existe des moyens de fixation mis en œuvre entre au moins deux modules de garnitures **36, 38, 40,** notamment entre le module central de garniture **40** et l'un ou les deux modules latéraux de garniture **36, 38,** chaque module de garniture **36, 38, 40** comporte des moyens de fixation aptes à assurer la fixation du module de garniture considéré sur l'armature de dossier **17,** indépendamment des autres modules de garniture **36, 38, 40.**

## Revendications

1. Dossier (16) de siège de véhicule (10) comprenant une armature de dossier (17) avec une traverse haute et une traverse basse, au moins un module central de garniture (40) et deux modules latéraux de garniture (36, 38) disposés chacun d'un côté respectif du module central de garniture (40), chacun des au moins trois modules de garniture (36, 38, 40) pouvant être fixé à l'armature de dossier (17) indépendamment des deux autres modules de garniture (36, 38, 40), chacun des au moins trois modules de garniture (36, 38, 40) étant de préférence fixé à l'armature de dossier (17) indépendamment des deux autres modules de garniture (36, 38, 40)
dossier dans lequel le module central de garniture (40) comprend au moins un support (54), fixé à l'armature de dossier (17), et un bloc de mousse (46) recouvrant en tout ou partie le support (54),
le support (54) s'étendant essentiellement selon une direction longitudinale entre deux extrémités longitudinales (54₁, 54₂) du support (54), les extrémités longitudinales (54₁, 54₂) étant recourbées, une extrémité longitudinale (54₂) du support reposant sur la traverse haute (17₄) de l'armature (17) et l'autre extrémité longitudinale (54₁) du support (54) recevant la traverse basse (17₃) de l'armature (17), les extrémités longitudinales (541, 542) du support (54) comportant respectivement des reliefs d'emboîtage élastique complémentaires de reliefs d'emboîtage élastique des traverses haute et basse (17₃, 17₄) de l'armature de dossier (17) pour une fixation aux traverses basse (17₃) et haute (17₄) par emboîtage élastique.

2. Dossier de siège de véhicule selon la revendication 1, dans lequel chaque module de garniture (36 ; 38 ; 40) comprend une garniture indépendante de la garniture des deux autres modules de garniture (36 ; 38 ; 40).

3. Dossier de siège de véhicule selon la revendication 1 ou 2, dans lequel le module central de garniture (40) et/ou les modules latéraux de garniture (36 ; 38) comprend/nent des moyens élastiques pour limiter la déflexion du support (54) du module central de garniture (40), par rapport à l'armature de dossier (17) et/ou du bloc de mousse (46) par rapport au support (54) du module central de garniture (40).

4. Dossier de siège de véhicule selon l'une des revendications 1 à 3, dans lequel le module central de garniture (40) comprend une pompe à air (70) et une pluralité de poches gonflables (68, 69), en communication de fluide avec la pompe à air (70), de préférence via une vanne (71) de commande sélective de l'alimentation en air des poches gonflables (68, 69).

5. Dossier de siège de véhicule selon l'une quelconque des revendications précédentes, dans lequel un ventilateur (67) est fixé sur le support (54), le bloc de mousse (46) du module central de garniture (40) comprenant des trous (47) traversant, en communication de fluide avec le ventilateur (67).

6. Dossier de siège de véhicule selon l'une quelconque des revendications précédentes, dans lequel au moins un haut-parleur et/ou au moins un dispositif vibrant est fixé sur le support (54) de manière à être disposé entre le support (54) et le bloc de mousse (46) du module central de garniture (40) ou au moins partiellement reçu dans le bloc de mousse (46) du module central de garniture (40).

7. Dossier de siège de véhicule selon l'une quelconque des revendications précédentes, dans lequel chaque module latéral de garniture (36, 38) comporte un bloc de mousse (42, 44) et, de préférence, un dispositif de réglage de maintien latéral et/ou un coussin gonflable de sécurité latéral (78), chaque module latéral de garniture (36, 38) comprenant en outre, de préférence encore, un support (73, 74) sur lequel est fixé le bloc de mousse (42, 44).

8. Dossier de siège de véhicule selon l'une quelconque des revendications précédentes, dans lequel le module central de garniture (40) et/ou au moins l'un, de préférence chacun parmi les modules latéraux de garniture (36, 38) comprend/nent une housse respective, chaque housse recouvrant au moins une partie du bloc de mousse (42, 44, 46) respectif, le cas échéant.

9. Dossier de siège de véhicule selon l'une quelconque des revendications 1 à 7, comprenant en outre une housse commune recouvrant en tout ou partie les trois modules de garniture (36, 38, 40), notamment les blocs de mousse (42, 44, 46) respectifs des trois modules de garniture (36, 38, 40), le cas échéant.

10. Siège de véhicule automobile (10) comprenant une assise (14) avec une armature d'assise (15) et un dossier (16) selon l'une quelconque des revendications précédentes, l'armature de dossier (17) étant fixée à l'armature d'assise (15), de préférence de manière à pouvoir pivoter autour d'un axe transversal.

11. Procédé de montage d'un dossier (16) de siège de véhicule automobile (10) selon l'une quelconque des revendications 1 à 9, comprenant les étapes consistant à :
fournir une armature de dossier (17) ;
fournir au moins trois modules de garniture (36, 38, 40) dont un module central de garniture (40) et deux modules latéraux de garniture (36, 38) destinés à être disposés chacun d'un côté respectif du module central de garniture (40) ;
fixer chacun des modules de garniture (36, 38, 40) sur l'armature de dossier (17).

12. Procédé selon la revendication 11, dans lequel, pour fixer le module central de garniture (40) sur les traverses (17₃, 17₄) de l'armature de dossier (17),
on place une extrémité repliée (54₂) du support (54) du module central de garniture (40) en appui sur la traverse haute (17₄) de l'armature de dossier (17),
on fait pivoter le module central de garniture (40) autour d'un axe transversal, des reliefs complémentaires de l'extrémité repliée (54₂) du support (54), d'une part, et de l'armature de dossier (17) et/ou d'une armature d'appui-tête (35) le cas échéant, d'autre part, guidant un mouvement essentiellement de rotation du support (54) par rapport à un axe transversal d'extension de la traverse haute (17₄) de l'armature de dossier (17), les reliefs complémentaires comportant de préférence des encoches réalisées à l'extrémité (54₂) du support (54) du module central de garniture (40) recevant des tiges de support d'appui-tête (35), puis
on fixe l'extrémité basse (54₁) du support (54) du module de garniture (40) sur la traverse basse (17₃) de l'armature de dossier (17).

13. Procédé de fabrication d'un siège de véhicule (10), comprenant les étapes consistant à :
fournir une assise (14) avec une armature d'assise (15) ;
monter un dossier (16) en mettant en œuvre le procédé de la revendication 11 ou 12 ; et
fixer le dossier (16) à l'assise (14), de préférence de manière que le dossier (16) puisse pivoter autour d'un axe transversal par rapport à l'assise (14).

14. Procédé de remplacement d'un module central de garniture (40) d'un dossier de siège (16) selon l'une quelconque des revendications 1 à 9, comprenant les étapes consistant à :
i) retirer un premier module central (40) de l'armature de dossier (17) ;
ii) fixer un deuxième module central (40) sur l'armature de dossier (17).

15. Procédé de remplacement selon la revendication 14, dans lequel l'étape i) et/ou l'étape ii) est/sont mise/s en œuvre sans démonter au moins l'un des modules latéraux de garniture (36, 38), de préférence aucun des deux modules latéraux de garniture (36, 38).

## Patentansprüche

1. Rückenlehne (16) für einen Fahrzeugsitz (10), umfassend einen Rückenlehnenrahmen (17) mit einer oberen und einer unteren Querstrebe, wenigstens ein mittleres Polstermodul (40) und zwei seitliche Polstermodule (36, 38), die jeweils auf einer Seite des mittleren Polstermoduls (40) angeordnet sind, wobei jedes der wenigstens drei Polstermodule (36, 38, 40) unabhängig von den beiden anderen Polstermodulen (36, 38, 40) an dem Rückenlehnenrahmen (17) befestigt werden kann, wobei jedes der wenigstens drei Polstermodule (36, 38, 40) bevorzugt unabhängig von den beiden anderen Polstermodulen (36, 38, 40) an dem Rückenlehnenrahmen (17) befestigt ist, wobei bei der Rückenlehne das mittlere Polstermodul (40) wenigstens einen am Rückenlehnenrahmen (17) befestigten Träger (54) und einen den Träger (54) ganz oder teilweise bedeckenden Schaumstoffblock (46) umfasst,
wobei sich der Träger (54) im Wesentlichen in einer Längsrichtung zwischen zwei Längsenden (54₁, 54₂) des Trägers (54) erstreckt, wobei die Längsenden (54₁, 54₂) gebogen sind, wobei ein Längsende (54₂) des Trägers auf der oberen Querstrebe (17₄) des Rahmens (17) aufliegt und das andere Längsende (54₁) des Trägers (54) die untere Querstrebe (17₃) des Rahmens (17) aufnimmt, wobei die Längsenden (54₁, 54₂) des Trägers (54) jeweils zu den elastischen Einrastvorsprüngen der oberen und unteren Querstreben (17₃, 17₄) des Rückenlehnenrahmens (17) komplementäre elastische Einrastvorsprünge zur Befestigung an den unteren (17₃) und oberen (17₄) Querstreben durch elastisches Einrasten umfassen.

2. Fahrzeugsitzrückenlehne nach Anspruch 1, wobei jedes Polstermodul (36; 38; 40) ein von dem Polster der beiden anderen Polstermodule (36; 38; 40) unabhängiges Polster umfasst.

3. Fahrzeugsitzrückenlehne nach Anspruch 1 oder 2, wobei das mittlere Polstermodul (40) und/oder die seitlichen Polstermodule (36; 38) elastische Mittel zur Begrenzung der Biegung des Trägers (54) des mittleren Polstermoduls (40) in Bezug auf den Rückenlehnenrahmen (17) und/oder des Schaumstoffblocks (46) in Bezug auf den Träger (54) des mittleren Polstermoduls (40) umfasst/umfassen.

4. Fahrzeugsitzrückenlehne nach einem der Ansprüche 1 bis 3, wobei das mittlere Polstermodul (40) eine Luftpumpe (70) und eine Vielzahl von aufblasbaren Taschen (68, 69) umfasst, die mit der Luftpumpe (70) in Fluidverbindung stehen, bevorzugt über ein Ventil (71) zur selektiven Steuerung der Luftzufuhr zu den aufblasbaren Taschen (68, 69).

5. Fahrzeugsitzrückenlehne nach einem der vorhergehenden Ansprüche, wobei ein Gebläse (67) an dem Träger (54) befestigt ist, wobei der Schaumstoffblock (46) des mittleren Polstermoduls (40) Durchgangslöcher (47) aufweist, die in Fluidverbindung mit dem Gebläse (67) stehen.

6. Fahrzeugsitzrückenlehne nach einem der vorhergehenden Ansprüche, wobei wenigstens ein Lautsprecher und/oder wenigstens eine Vibrationsvorrichtung derart an dem Träger (54) befestigt ist, dass sie zwischen dem Träger (54) und dem Schaumstoffblock (46) des mittleren Polstermoduls (40) angeordnet ist oder wenigstens teilweise in dem Schaumstoffblock (46) des mittleren Polstermoduls (40) aufgenommen ist.

7. Fahrzeugsitzrückenlehne nach einem der vorhergehenden Ansprüche, wobei jedes seitliche Polstermodul (36, 20, 38) einen Schaumstoffblock (42, 44) und bevorzugt eine seitliche Steuervorrichtung und/oder einen seitlichen Airbag (78) aufweist, wobei jedes seitliche Polstermodul (36, 38) ferner bevorzugt noch einen Träger (73, 74) umfasst, an dem der Schaumstoffblock (42, 44) befestigt ist.

8. Fahrzeugsitzrückenlehne nach einem der vorhergehenden Ansprüche, wobei das mittlere Polstermodul (40) und/oder wenigstens ein, bevorzugt jedes der seitlichen Polstermodule (36, 38) eine jeweilige Abdeckung umfasst/umfassen, wobei jede Abdeckung gegebenenfalls wenigstens einen Teil des jeweiligen Schaumstoffblocks (42, 44, 46) bedeckt.

9. Fahrzeugsitzrückenlehne nach einem der Ansprüche 1 bis 7, welche ferner eine gemeinsame Abdeckung umfasst, die alle oder einen Teil der drei Polstermodule (36, 38, 40) bedeckt, insbesondere gegebenenfalls die jeweiligen Schaumstoffblöcke (42, 44, 46) der drei Polstermodule (36, 38, 40).

10. Fahrzeugsitz (10) mit einer Sitzfläche (14) mit einem Sitzflächenrahmen (15) und einer Rückenlehne (16) nach einem der vorhergehenden Ansprüche, wobei der Rückenlehnenrahmen (17) am Sitzflächenrahmen (15) befestigt ist, bevorzugt so, dass er um eine Querachse schwenken kann.

11. Verfahren zur Montage einer Rückenlehne (16) eines Fahrzeugsitzes (10) nach einem der Ansprüche 1 bis 9, das die folgenden Schritte umfasst:
Bereitstellen eines Rückenlehnenrahmens (17);
Bereitstellen von wenigstens drei Polstermodulen (36, 38, 40), darunter ein mittleres Polstermodul (40) und zwei seitliche Polstermodule (36, 38), die dazu bestimmt sind, jeweils auf einer Seite des mittleren Polstermoduls (40) angeordnet zu werden;
Befestigen der einzelnen Polstermodule (36, 38, 40) an dem Rückenlehnenrahmen (17).

12. Verfahren nach Anspruch 11, wobei zur Befestigung des mittleren Polstermoduls (40) an den Querstreben (17₃, 17₄) des Rückenlehnenrahmens (17)
ein umgebogenes Ende (54₂) des Trägers (54) des mittleren Polstermoduls (40) auf der oberen Querstrebe (17₄) des Rückenlehnenrahmens (17) aufliegt,
das mittlere Polstermodul (40) um eine Querachse gedreht wird, wobei komplementäre Reliefs des umgebogenen Endes (54₂) des Trägers (54) einerseits und des Rückenlehnenrahmens (17) und/oder gegebenenfalls eines Kopfstützenrahmens (35) andererseits eine im Wesentlichen drehende Bewegung des Trägers (54) in Bezug auf eine Querachse der oberen Querstrebe (17₄) des Rückenlehnenrahmens (17) führt, wobei die komplementären Reliefs bevorzugt Aussparungen aufweisen, die am Ende (54₂) des Trägers (54) des mittleren Polstermoduls (40) ausgeführt sind, welche Stützstangen der Kopfstützen (35) aufnehmen, und
wobei dann das untere Ende (54₁) des Trägers (54) des Polstermoduls (40) an der unteren Querstrebe (17₃) des Rückenlehnenrahmens (17) befestigt wird.

13. Verfahren zur Herstellung eines Fahrzeugsitzes (10), das die folgenden Schritte umfasst:
Bereitstellen einer Sitzfläche (14) mit einem Sitzflächenrahmen (15);
Montieren einer Rückenlehne (16) unter Anwendung des Verfahrens nach Anspruch 11 oder 12; und
Befestigen der Rückenlehne (16) an der Sitzfläche (14), bevorzugt derart, dass die Rückenlehne (16) um eine Achse quer zur Sitzfläche (14) schwenken kann.

14. Verfahren zum Austauschen eines mittleren Polstermoduls (40) einer Sitzrückenlehne (16) nach einem der Ansprüche 1 bis 9, umfassend die Schritte:
i) Entfernen eines ersten mittleren Moduls (40) von dem Rückenlehnenrahmen (17);
ii) Befestigen eines zweiten mittleren Moduls (40) an dem Rückenlehnenrahmen (17).

15. Austauschverfahren nach Anspruch 14, wobei Schritt i) und/oder Schritt ii) durchgeführt wird/werden, ohne dass wenigstens eines der seitlichen Polstermodule (36, 38), bevorzugt keines der beiden seitlichen Polstermodule (36, 38), demontiert wird.

## Claims

1. Backrest (16) of a vehicle seat (10) comprising a backrest armature (17) with an upper cross member (17₄) and a lower cross member (17₃), at least one central upholstery module (40) and two side upholstery modules (36, 38) each arranged on a respective side of the central upholstery module(40), each of the at least three upholstery modules (36, 38, 40) being fixable to the backrest armature (17) independently of the other two upholstery modules (36, 38, 40), each of the at least three upholstery modules (36, 38, 40) being preferably fixed to the backrest armature (17) independently of the other two upholstery modules (36, 38, 40) backrest in which the central upholstery module (40) comprises at least one support (54), fixed to the backrest armature (17), and one foam block (46) covering in whole or in part the support (54),
wherein the support (54) extends in a longitudinal direction between two longitudinal ends (54₁, 54₂) of the support (54), the longitudinal ends (54₁, 54₂) of the support (54) being curved, one longitudinal end (54₂) of the support (54) resting on the upper cross member (17₄) of the backrest armature (17) and the other longitudinal end (54₁) of the support (54) accommodating the lower cross member (17₃) of the backrest armature (17), the longitudinal ends (54₁, 54₂) of the support (54) respectively comprising snap fitting reliefs, complementary to snap fitting reliefs on the upper and lower cross members (17₃, 17₄) of the backrest armature (17) for fixing onto the lower (17₃) and upper (17₄) cross members by snap fitting.

2. Vehicle seat backrest according to claim 1, wherein each upholstery module (36; 38; 40) comprises a piece of upholstery independent with respect to the upholstery of the two other upholstery modules (36; 38; 40).

3. Vehicle seat backrest according to claim 1 or 2, wherein the central upholstery module (40) and/or the side upholstery modules (36; 38) include/s elastic means for limiting deflection of the support (54) of the central upholstery module (54), relative to the backrest armature (17) and/or the foam block (46) with respect to the support (54) of the central upholstery module (40).

4. Vehicle seat backrest according to one of claims 1 to 3, wherein the central upholstery module (40) comprises an air pump (70) and a plurality of inflatable pouches (68, 69), in fluid communication with the air pump (70), preferably via a valve (71) for selectively controlling the air supply to the inflatable bags (68, 69).

5. Vehicle seat backrest according to any one of the preceding claims, wherein a fan (67) is fixed to the support (54), the foam block (46) of the central upholstery module (40) comprising through holes (47), in fluid communication with the fan (67).

6. Vehicle seat backrest according to any one of the preceding claims, wherein at least one loudspeaker and/or at least one vibrating device is fixed on the support (54) so as to be arranged between the support (54) and the foam block (46) of the central upholstery module (40) or at least partially housed in the foam block (46) of the central upholstery module (40).

7. Vehicle seat backrest according to any one of the preceding claims, wherein each side upholstery module (36, 38) comprises a foam block (42, 44) and, preferably, a lateral hold adjustment device and/or a lateral airbag (78), wherein each side upholstery module (36, 38) further comprises more preferably a support (73, 74) to which the foam block (42, 44) is fixed.

8. Vehicle seat backrest according to any one of the preceding claims, wherein the central upholstery module (40) and/or at least one, preferably each of the side upholstery modules (36, 38) comprise/s a respective cover, each cover covering at least part of the respective foam block (42, 44, 46), if applicable.

9. Vehicle seat backrest according to any one of claims 1 to 7, further comprising a common cover covering all or part of the three upholstery modules (36, 38, 40), in particular the respective foam blocks (42, 44, 46) of the three upholstery modules (36, 38, 40), if applicable.

10. Motor vehicle seat (10) comprising a seating base (14) with a seating base armature (15) and a backrest (16) according to any one of the preceding claims, the backrest armature (17) being fixed to the seating base armature (15), preferably so as to be able to pivot about a transverse axis.

11. Method of assembling a backrest (16) of a motor vehicle seat (10) according to any one of claims 1 to 9, comprising the steps of:
providing a backrest armature (17);
providing at least three upholstery modules (36, 38, 40) including a central upholstery module (40) and two side upholstery modules (36, 38) intended to be each arranged on a respective side of the central upholstery module (40);
fixing each of the upholstery modules (36, 38, 40) to the backrest armature (17).

12. Method according to claim 11, wherein the central upholstery module (40) is fixed onto the cross members (17₃, 17₄) of the backrest frame (17) by:
placing a curved longitudinal end (54₂) of the support (54) of the central upholstery module (40) resting on the upper cross member (17₄) of the backrest armature (17), pivoting the central upholstery module (40) around a transverse axis, wherein complementary reliefs of the curved longitudinal end (54₂) of the support (54), on the one hand, and of the backrest frame (17) and/or of an headrest armature (35) if any, on the other hand, guide an essentially rotative movement of the central upholstery module (40) around a transversal axis of extension of the upper cross member (17₄) of the backrest armature (17), the complementary reliefs preferably comprising notches made at the end (54₂) of the support (54) of the central upholstery module (40) accommodating headrest support rods (35), and then fixing the lower longitudinal end (54₁) of the support (54) of the central upholstery module (40) onto the lower cross member (17₃) of the backrest armature (17).

13. Method of manufacturing a vehicle seat (10), comprising the steps of:
providing a seating base (14) with a seating base armature (15);
assembling a backrest (16) by implementing the method of claim 11 or 12; and
fixing the backrest (16) to the seating base (14), preferably so that the backrest (16) can pivot about an axis transverse with respect to the seating base (14).

14. Method for replacing a central upholstery module (40) of a seat backrest (16) according to any one of claims 1 to 9, comprising the steps of:
i) removing a first central module (40) from the backrest armature (17);
ii) fixing a second central module (40) onto the backrest armature (17).

15. Replacement method according to claim 14, wherein step i) and/or step ii) is/are carried out without disassembling at least one of the side upholstery modules (36, 38), preferably neither of the two side upholstery modules (36, 38).
